# FASCICULE DE BREVET EUROPEEN

(11) **EP 2 040 537 B1**
(45) Date de publication et mention de la délivrance du brevet: **18.04.2012**
(21) Numéro de dépôt: 07788832.9
(22) Date de dépôt: 04.06.2007
(51) Int. Cl.: A01K 63/04, C02F 1/20, C02F 3/22

(54) **PROCEDE ET INSTALLATION DE TRAITEMENT D'UN EFFLUENT AQUEUX, EN VUE D'EN EXTRAIRE AU MOINS UN COMPOSE GAZEUX DISSOUS; APPLICATION A L'AQUACULTURE EN MILIEU AQUEUX RECIRCULE**
VERFAHREN UND VORRICHTUNG ZUR BEHANDLUNG EINES ABWASSERS ZUR ENTFERNUNG VON MINDESTENS EINER GELÖSTEN GASFÖRMIGEN VERBINDUNG DARAUS; ANWENDUNG IN DER AQUAKULTUR IN EINER UMGEWÄLZTEN WÄSSRIGEN UMWELT
PROCESS AND INSTALLATION FOR TREATING AN AQUEOUS EFFLUENT FOR THE PURPOSE OF EXTRACTING AT LEAST ONE DISSOLVED GASEOUS COMPOUND THEREFROM; APPLICATION TO AQUACULTURE IN A RECIRCULATED AQUEOUS ENVIRONMENT

(30) Priorité: 13.07.2006 US 830343 P; 29.03.2007 FR 0702308
(43) Date de publication de la demande: 01.04.2009
(73) Titulaire: Institut National Des Sciences Appliquees, F-69100 Villeurbanne (FR); Institut Francais de Recherche pour l'Exploitation de la Mer (IFREMER), 92130 Issy-les-Moulineaux Cedex (FR)
(72) Inventeur: RENE, François, 34570 Saussan (FR); LEMARIE, Gilles, F-34070 Montpellier (FR); CHAMPAGNE, Jean-Yves, F-69006 Lyon (FR); MOREL, Robert, F-69100 Villeurbanne (FR)
(74) Mandataire: Chevalier, Renaud Philippe
(86) Numéro de dépôt international: PCT/FR2007/000920
(87) Numéro de publication internationale: WO 2008/006950

(56) Documents cités:
- EP-A- 0 457 261
- DE-C1- 4 039 824
- US-A- 5 180 503
- US-A1- 2003 057 163
- BRUHL H ET AL: "IN-SITU-SANIERUNG VON GRUNDWASSER ERFAHRUNGEN MIT DEM HYDRO-AIRLIFT-BRUNNEN" GWF WASSER ABWASSER, OLDENBOURG VERLAG. MUNCHEN, DE, vol. 136, no. 1, janvier 1995 (1995-01), pages 25-33, XP000486305 ISSN: 0016-3651
- AMOS RICHMOND ET AL: "A new tubular reactor for mpass production of microalgae outdoors" JOURNAL OF APPLIED PHYSIOLOGY, AMERICAN PHYSIOLOGICAL SOCIETY, US, vol. 5, 1993, pages 327-332, XP009093200 ISSN: 8750-7587

## Description

De manière générale, l'invention concerne le traitement d'un effluent aqueux, comprenant un ou plusieurs composés gazeux dissous, par exemple dioxyde de carbone et/ou azote, en vue d'en séparer tout ou partie desdits composés, considérés par exemple comme des polluants, et ce afin d'obtenir une phase aqueuse traitée, appauvrie en le ou lesdits composés gazeux, ou en tous cas dont la concentration en ces derniers se trouve ainsi contrôlée ou maîtrisée, par exemple au-dessous ou au-dessus d'un seuil prédéterminé.

De manière particulière, mais à titre d'exemple, le traitement considéré par la présente invention fait partie de tout procédé de culture d'un organisme vivant, par exemple aquaculture, en milieu aqueux recirculé, selon lequel de manière générale :
- on dispose d'un bain du milieu aqueux, à ciel ouvert ou non, fractionné ou non en circuits élémentaires en série ou en parallèle, dans lequel l'organisme vivant en culture, par exemple poisson, est immergé,
- on soutire du bain un courant effluent, à partir duquel on obtient l'effluent aqueux à traiter pour contrôler sa charge en composés gazeux dissous,
- on alimente ou on réinjecte dans le même bain un courant d'alimentation, obtenu à partir de la phase aqueuse traitée, c'est-à-dire appauvrie en composés gazeux dissous.

Par "organisme vivant", on entend aussi bien des organismes vivants du règne inférieur, tels que micro-organismes, algues, etc..., que des organismes vivants du règne supérieur, tels que poissons, mollusques ou coquillages.

Aux fins de l'exposé de la présente invention, cette dernière sera maintenant introduite, explicitée et commentée par référence à l'aquaculture en milieu aqueux recirculé.

Dans les conditions d'une aquaculture en milieu aqueux recirculé, pour favoriser la croissance et le bon état sanitaire des poissons, on sait aujourd'hui qu'il est essentiel de maîtriser la concentration en gaz dissous, à savoir de maintenir :
- l'oxygène dissous en deçà d'un certain seuil,
- le gaz carbonique et l'azote dissous.

Pour appauvrir également l'effluent aqueux d'aquaculture en au moins un composé gazeux dissous, par exemple gaz carbonique dissous, on met en oeuvre une colonne dite ventilée, qui consiste pour l'essentiel en une colonne remplie avec un garnissage consistant en éléments discrets favorisant un interface (ou dioptre) gaz/liquide de grande surface développée selon la section et la hauteur de la colonne. L'effluent gazeux à traiter est introduit et distribué en haut de la colonne, au-dessus du garnissage, par exemple par aspersion, tandis qu'une phase gazeuse d'élution ou "stripping", moins riche en ledit composé gazeux (gaz carbonique) que l'effluent aqueux, par exemple de l'air sous pression, est introduite en bas de la colonne, par exemple au sein du garnissage. Un courant liquide constituant la phase aqueuse traitée est extrait au pied de la colonne, et un courant gazeux effluent, enrichi en ledit composé gazeux dissous est extrait au sommet de la colonne.

Par l'expression "moins riche en ledit composé gazeux", on entend le fait que, toutes choses égales par ailleurs (dont pression), la concentration en dit composé gazeux dans la phase aqueuse qui serait en équilibre avec la concentration en dit composé gazeux dans la phase gazeuse est plus faible que la concentration effective en dit composé gazeux dans la phase aqueuse traitée. Pour l'essentiel, mettre en oeuvre une colonne ventilée équivaut à faire circuler de l'eau à travers une phase gazeuse, en l'occurrence de l'air, grosso modo dans le rapport de dix volumes d'air à contre-courant d'un volume d'eau traité.

La mise en oeuvre de ces colonnes ventilées, assimilables à des tours aéroréfrigérées, présente divers inconvénients.

Leur rendement d'extraction en gaz dissous est limité. S'agissant du gaz carbonique, par exemple, il n'apparaît pas possible d'extraire plus de 25 à 30 % du gaz carbonique dissous. Ceci tient à la surface développée limitée de l'interface gaz/liquide, laquelle se trouve encore diminuée par le développement de biofilms dans le garnissage de la colonne, d'une part, et par des colmatages et cheminements préférentiels de l'eau dans le garnissage, d'autre part.

Toute colonne ventilée est également relativement consommatrice en énergie, quant à son fonctionnement, puisqu'il faut en particulier pomper l'effluent aqueux à traiter pour l'élever au niveau haut de la colonne.

S'agissant du maintien en température de la phase aqueuse traitée de sortie, par rapport à l'effluent aqueux d'entrée, ce qui peut avoir de l'importance dans un procédé d'aquaculture en milieu aqueux recirculé, la mise en oeuvre d'une colonne ventilée est par nature dissipatrice d'énergie thermique, ce qui oblige dans certains cas à réchauffer la phase aqueuse traitée à la sortie de la colonne ventilée.

Toute colonne ventilée représente une enceinte de volume non négligeable compte tenu du volume d'air (phase gazeuse circulante), ce qui conduit à une installation relativement encombrante, pouvant représenter un investissement en matériau et infrastructure non négligeable.

Et, d'un point de vue sécurité biologique, à l'instar des tours aéroréfrigérées, la mise en oeuvre d'une colonne ventilée peut générer des aérosols susceptibles de venir au contact de l'atmosphère environnante, compte tenu de la surpression existant dans la colonne ventilée.

La présente invention a pour objet de remédier aux inconvénients précités des colonnes ventilées.

Pour oxygéner un milieu aqueux, y compris en aquaculture, on connaît les systèmes gazo-siphons ou "air-lift", lesquels en pratique revêtent différentes formes de mise en oeuvre. De manière générale, un gazo-siphon consiste, par tout moyen approprié, par exemple un conduit vertical immergé au moins en partie dans un bain de milieu aqueux, ou un conduit disposé à l'extérieur du bain, à établir une colonne liquide montante.

Pour ce faire, on injecte et distribue dans la colonne, en pratique au bas du conduit vertical, une phase gazeuse sous pression, laquelle se répartit dans la colonne liquide sous forme de bulles dont le volume augmente vers le haut, moyennant quoi on obtient du côté haut du conduit vertical un courant mixte liquide/gaz, plus ou moins homogène, lequel est par exemple évacué par l'extrémité haute du conduit vertical.

Un gazo-siphon apparaît donc être un système dynamique, mais sans pièces mécaniques du type pompe, permettant de relever, sur une certaine hauteur, un liquide, et ce par la mise en oeuvre de bulles plus ou moins grosses, obtenues par injection et distribution d'un gaz sous pression dans un liquide confiné selon une colonne verticale.

De tels systèmes sont bien connus, et ont été modélisés par différents auteurs; cf. D.J. REINEMANN et M.B. TIMMONS, Aquacultural Engineering 8 (1989), 29-46.

En aquaculture, de tels systèmes sont largement utilisés pour oxygéner le bain du milieu aqueux, dans lequel les poissons sont élevés, au sein même dudit bain, ou à l'extérieur de ce dernier, pour un milieu aqueux recirculé, et ce en injectant et distribuant de l'air atmosphérique sous pression.

Tout gazo-siphon est susceptible, non seulement d'oxygéner un effluent aqueux traité au moyen de celui-ci, lorsque la phase aqueuse injectée et distribuée est de l'air ou de l'oxygène, mais aussi de dégazer ce même effluent aqueux en composés gazeux dissous, tels le gaz carbonique, ce qu'ont établi et étudié différents auteurs ; cf. J CLAY LOYLESS et R.F. MALONE, Aquacultural Engineering 18 (1998) 117-133. Par conséquent, tout gazo-siphon a la capacité d'éluer ou "stripper" les composés gazeux dissous d'un effluent aqueux les contenant, à la condition de mettre en oeuvre une phase gazeuse de gazo-siphon appropriée, c'est-à-dire moins riche en ledit composé gazeux que l'effluent aqueux traité.

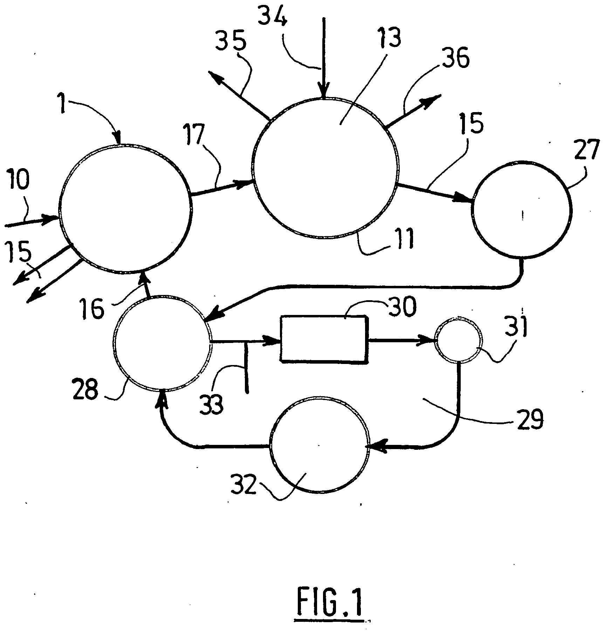

Conformément à la publication de A. RICHMOND, S. BOUSSIBA, A. VONSHAK et R. KOPEL, de Journal of Applied Phycology 5-327-332, 1993 et sa figure 1, on a décrit un procédé d'aquaculture de micro-algues en milieu aqueux récirculé, selon lequel :
- on dispose d'un bain du milieu aqueux, dans lequel les micro-algues sont cultivées, en pratique contenu dans des faisceaux de tube disposés horizontalement, avec un distributeur d'entrée, et un collecteur de sortie,
- on soutire du bain, par le collecteur de sortie, un courant effluent, enrichi ou saturé en oxygène, constituant l'effluent traité,
- ce dernier est traité grâce à un gazo-siphon, tel que décrit
   précédemment, travaillant sous pression positive. A cette fin, on établit une colonne liquide montante de l'effluent aqueux traité, on injecte et on distribue dans cette colonne, du côté bas, de l'air, cette phase gazeuse se répartissant dans la colonne sous forme de bulles dont le volume augmente vers le haut, moyennant quoi on obtient du côté haut un courant mixte liquide/gaz,
- dans un séparateur/dégazeur, on sépare le courant mixte liquide/gaz en un courant liquide constituant la phase aqueuse traitée, laquelle est enrichie en gaz carbonique et retournée vers le distributeur d'entrée du bain, et un courant gazeux effluent enrichi en oxygène.

Un tel procédé de traitement présente en pratique un rendement d'extraction en gaz dissous relativement limité.

Différents documents ont décrit par ailleurs des procédés de traitement d'un effluent aqueux ou d'un milieu aqueux, mettant en oeuvre un gazo-siphon avec de l'air atmosphérique injecté sous pression :
- C.E. BOYD et C.S. TUCKER, dans l'ouvrage "Pond aquaculture water quality management" pages 354-373, de 1998, décrivent l'utilisation d'un gazo-siphon au sein d'un bain du milieu aqueux d'aquaculture, à ciel ouvert,
- le document US-C-4 972 801 décrit l'utilisation d'un gazo-siphon au sein d'un forage ou puits d'alimentation en eau d'un bassin d'aquaculture, permettant de relever l'eau d'alimentation pour sa distribution au sein du bassin, d'une part, et d'oxygéner le courant d'eau d'alimentation,
- les documents US-C-5 961 831 et US-C-6 171 480 un système complet d'aquaculture comportant un gazo-siphon pour relever un effluent aqueux, prélevé en sortie du bain d'aquaculture, après sa filtration, et avant sa biofiltration. Le document EP 0457 261 A1 décrit un dispositif d'épuration d'une eau souterraine chargée en polluants qui est enfoui dans le sol et dans lequel on injecte du gaz en haut dudit dispositif.

La présente invention a pour objet une mise en oeuvre particulière d'un gazo-siphon, permettant de remédier aux inconvénients des colonnes ventilées.

L'invention a pour objet d'améliorer le rendement d'extraction en gaz dissous des gazo-siphons.

De manière générale, la présente invention concerne un procédé de traitement d'un effluent aqueux comprenant au moins un composé gazeux dissous, par exemple du gaz carbonique, Le document EP 0457 261 A1 décrit un dispositif d'épuration d'une eau souterraine chargée en polluants qui est enfoui dans le sol et dans lequel on injecte du gaz en haut dudit dispositif. selon l'une quelconque des revendications 1 à 12 et une installation pour la mise en oeuvre dudit procédé selon la revendication 13.

Le procédé selon la présente invention fonctionne à l'inverse de celui décrit dans la publication de A. RICHMOND et al, en ce qu'il permet, grâce à la dépression précitée, d'appauvrir la phase aqueuse traitée en gaz carbonique, tout en l'enrichissant en oxygène dissous.

Et plus particulièrement, mais de manière non exclusive, ce procédé de traitement, de dégazéification ou dégazage, s'intègre dans un procédé de culture d'un organisme vivant, en milieu aqueux recirculé, selon lequel :
- on dispose d'un bain du milieu aqueux, dans lequel l'organisme vivant est cultivé,
- on soutire du bain un courant d'effluent, à partir duquel on obtient l'effluent aqueux,
- et on alimente le bain avec un courant d'alimentation, obtenu à partir de la phase aqueuse traitée,
- la phase aqueuse traitée étant obtenue en dehors du bain du milieu aqueux, par un traitement de dégazage ou dégazéification tel que précédemment défini.

Par "sous dépression", s'agissant de la séparation du courant mixte liquide/gaz, on entend toute pression inférieure à la valeur obtenue en soustrayant, par exemple en cm d'eau, la hauteur de la colonne liquide montante à la pression atmosphérique, ou pression hydraulique de l'effluent aqueux à traiter.

Préférentiellement, le procédé selon l'invention est mis en oeuvre à la manière d'un siphon, et pour ce faire le courant liquide séparé du courant gazeux effluent constitue une colonne liquide descendante, obtenue par déverse du courant mixte liquide/gaz au-dessus d'un point haut. En pareil cas, par exemple, la colonne liquide descendante et la colonne liquide montante sont concentriques l'une par rapport à l'autre.

Par rapport à une dégazéification avec une colonne ventilée, le procédé de traitement selon l'invention apporte les avantages essentiels suivants :
- son fonctionnement consomme peu d'énergie, puisqu'on doit seulement comprimer la phase gazeuse injectée dans la colonne liquide, et pomper le courant gazeux effluent, pour placer la séparation du courant mixte liquide/gaz sous dépression,
- son fonctionnement dissipe peu d'énergie thermique, puisque sa mise en oeuvre peut s'accomplir dans une installation compacte et ramassée, par exemple deux tubes concentriques disposés l'un dans l'autre,
- comme dit précédemment, l'installation requise pour son fonctionnement demeure relativement simple et peu encombrante,
- son fonctionnement demeure sûr, d'un point de vue biologique, puisque confiné, et majoritairement sous dépression
- et le courant gazeux effluent, après compression, peut être condensé pour récupérer l'énergie de condensation des composés gazeux extraits.

Le procédé de traitement selon l'invention se prête bien également :
- à une réoxygénation de la phase aqueuse traitée, par injection d'oxygène dans la colonne montante et/ou la colonne descendante,
- à une ozonisation de la phase aqueuse traitée, par injection d'ozone dans la colonne montante,
- et à une extraction des particules solides, au niveau du courant gazeux effluent, lorsque celui-ci se présente sous forme de mousse.

La présente invention est maintenant décrite par référence au dessin annexé, dans lequel :
- la figure 1 représente de manière schématique un équipement complet d'aquaculture, en milieu aqueux recirculé, dans lequel prend place et s'intègre une installation de traitement de l'effluent aqueux résultant notamment du métabolisme et de la croissance des organismes vivants élevés, par exemple des poissons,
- la figure 2 représente, de manière schématique, plus particulièrement l'installation de traitement de l'effluent aqueux d'aquaculture.

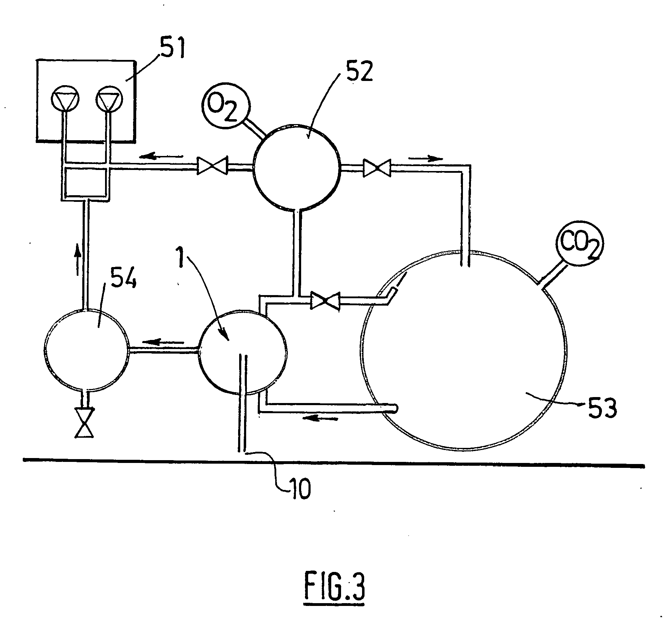

- la figure 3 représente un montage expérimental ayant permis de tester la présente invention.

L'équipement d'aquaculture représenté schématiquement à la **figure 1** est organisé autour d'un bain 13 du milieu aqueux, dans lequel l'organisme vivant d'intérêt, par exemple des poissons, est cultivé ou élevé ; ce bain 13 est par exemple contenu dans un bassin 14. A partir du bain 13, on soutire un courant d'effluent 15, qui est filtré mécaniquement 27, puis envoyé dans un bac tampon 28. A partir du bac tampon précité, on établit une boucle de recirculation 29, permettant de convertir, par la voie enzymatique ou bactérienne, l'azote effluent, notamment ammoniac, en nitrite et nitrate. A cette fin, un courant est prélevé du bac tampon 28, éventuellement complété 33 avec de l'eau fraîche, réchauffé dans un échangeur 30, stérilisé 31 par un rayonnement UV, puis filtré au moyen d'un lit bactérien 32, et finalement renvoyé vers le bac 28. L'effluent aqueux 16 à traiter selon l'invention est obtenu à partir du bac tampon 28.

L'installation de traitement selon l'invention, c'est-à-dire pour extraire ou éliminer les gaz dissous 19, à savoir gaz carbonique et dans une certaine mesure azote, est représentée schématiquement sous la référence numérique 1. Elle reçoit l'effluent aqueux 16, et elle génère une phase aqueuse traitée, c'est-à-dire dégazée, à partir de laquelle un courant d'alimentation 17 est réintroduit dans le bain 13. Au passage, dans l'installation de traitement 1, le milieu aqueux se trouve déplété en gaz dissous, évacués avec le courant gazeux 19, sous l'effet de l'élution ou "stripping" générée par l'injection dans le milieu de la phase gazeuse 10, en l'occurrence de l'air, et par conséquent moins riche en gaz carbonique et/ou azote. Une partie de l'effluent aqueux 16 introduite dans l'installation de traitement 1 peut être obtenue directement à partir du bain 13, c'est-à-dire sans passage dans la boucle de filtrage bactérien 29. Et, de manière traditionnelle, en considérant le bain 13 comme un milieu fermé, outre le courant d'alimentation 17 et le courant effluent 15, celui-ci reçoit des aliments 34 pour la croissance et le développement des organismes vivants cultivés, ces derniers sont régulièrement récoltés ou extraits du bassin 14, et une purge en nitrates 35 est régulièrement effectuée.

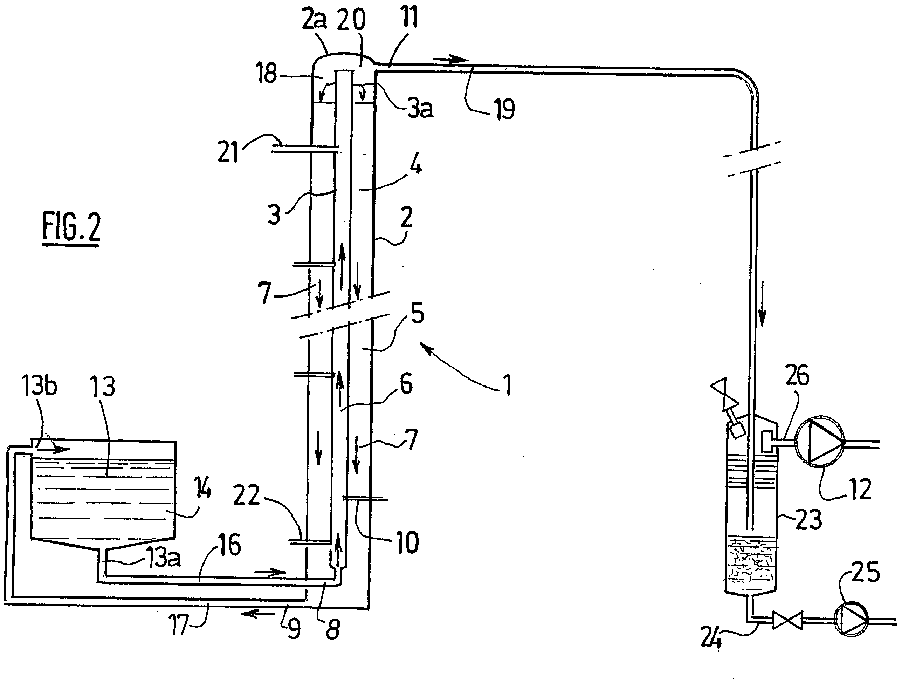

L'installation de traitement de l'effluent aqueux, représentée à la figure 2 en association avec le bain 13 d'aquaculture, comprend pour l'essentiel une colonne dite à dépression, constituée par au moins :
- deux tubes concentriques, l'un extérieur 2 et l'autre intérieur 3, disposés verticalement, ménageant une enceinte tubulaire interne 4 pour une colonne liquide montante 6 ou une colonne liquide descendante 7, et une enceinte tubulaire externe 5 pour la colonne descendante 7 ou la colonne montante 6 ; le tube extérieur 2 est fermé 2a dans sa partie supérieure, au-dessus de l'extrémité supérieure 3a ouverte du tube intérieur 3, en sorte que l'enceinte externe 5 est fermée et isolée par rapport à l'extérieur,
- un moyen d'introduction 8 de l'effluent aqueux 16 à traiter, disposé au pied de l'enceinte interne 4 ou de l'enceinte externe 5 ; un moyen d'évacuation 9 de la phase aqueuse traitée au pied de l'enceinte externe 5 ou de l'enceinte interne 4,
- un moyen 10 d'injection et distribution de la phase gazeuse, en l'occurrence de l'air sous pression, dans la colonne montante 6, reliée à une source de ladite phase gazeuse sous pression, non représentée,
- un moyen d'évacuation 11 du courant gazeux effluent, enrichi en composé gazeux préalablement dissous dans l'effluent aqueux, relié indirectement à un moyen d'aspiration 12, consistant en une pompe à air.

Grâce à cette installation, on peut traiter l'effluent aqueux 16, comprenant le ou les composés gazeux dissous, en l'occurrence du gaz carbonique, en séparant au moins partiellement ceux-ci de l'effluent, pour obtenir la phase aqueuse traitée 17, appauvrie en ces composés.

Par référence à la **figure 2** :
a) on établit une colonne liquide montante 6 de l'effluent aqueux, dans l'enceinte interne 4, en injectant et distribuant 10 dans ladite colonne, du côté bas, une phase gazeuse moins riche en composés précités que l'effluent aqueux, en l'occurrence de l'air ou de l'oxygène sous pression, moyennant quoi cette phase gazeuse se répartit dans cette colonne sous forme de bulles (non représentées), dont le volume augmente vers le haut, moyennant quoi on obtient du côté haut un courant mixte 18 liquide/gaz plus ou moins homogène,
b) on sépare ce courant mixte liquide/gaz, en un courant liquide 17, constituant une colonne liquide descendante 7 dans l'enceinte externe 5, obtenue par déverse du courant mixte 18 précité au-dessus du bord ou point haut 3a du tube intérieur 3, et en un courant gazeux 19 effluent, enrichi en dit composé gazeux.

Conformément à l'invention, dans la partie supérieure de l'enceinte externe 5, on établit un ciel gazeux 20 entre le courant liquide 17 et le courant gazeux 19, correspondant à la séparation du courant mixte 18 liquide/gaz ; et ce ciel gazeux se trouve sous dépression, compte tenu de l'aspiration par la pompe 12 du courant gazeux 19.

Par conséquent, la colonne à dépression précédemment décrite fonctionne à la manière d'un siphon, comme représenté à la figure 2, selon laquelle la colonne liquide descendante 7 et la colonne liquide montante 6 sont concentriques l'une par rapport à l'autre, la colonne liquide montante 6 étant intérieure, et la colonne liquide descendante 7 étant extérieure, ou inversement.

L'installation représentée à la figure 2 présente encore les caractéristiques suivantes, pouvant être considérées isolément ou en combinaison les unes avec les autres.

L'effluent aqueux 16 est introduit au pied de la colonne montante 6 et la phase aqueuse traitée est soutirée au pied de la colonne descendante 7, sensiblement au même niveau.

En plus de l'air injecté, de l'oxygène 21 est injecté et distribué dans la colonne montante 6, à un niveau haut, en tout cas supérieur au niveau d'introduction 10 de la phase gazeuse. Cette injection d'oxygène permet, le cas échéant, de compléter l'oxygénation du milieu aqueux d'aquaculture.

Le cas échéant, par exemple pour stériliser le milieu aqueux, décomposer les acides humiques, et restaurer le potentiel rédox du milieu aqueux, de l'ozone peut être injectée 22 et distribuée dans la colonne descendante 7, à un niveau inférieur au niveau d'introduction 10 de la phase gazeuse.

Si nécessaire, la section de la colonne liquide descendante 7 croît vers le bas.

Généralement, le courant gazeux effluent, est sous forme de mousse. En conséquence, des moyens traditionnels de démoussage 23 sont prévus, pour obtenir un exsudat liquide 24, pouvant comprendre une fraction particulaire, par exemple des matières organiques en suspension ou sous forme colloïdale, et un effluent gazeux 26 exempt de phase liquide et de particules solides. L'exsudat liquide 24 est évacué par une pompe 25. L'effluent gazeux 26 est pompé par la pompe 12, dont l'aspiration est en relation avec le ciel gazeux 20 de l'enceinte tubulaire externe 5.

Comme le montre la figure 2 :
- on soutire du bain d'aquaculture 13 un courant effluent 15, à partir duquel l'effluent aqueux à traiter 16 est obtenu
- et on alimente le même bain 13 avec un courant d'alimentation 17, obtenu à partir de, ou identique à la phase aqueuse traitée, cette dernière étant obtenue en dehors du bain 13 à partir de l'effluent aqueux 16, conformément au procédé de traitement effectué dans la colonne à dépression 1.

Le niveau de soutirage 13a du bain 13 est sensiblement le même que celui du pied de la colonne liquide montante 6. Et le niveau d'alimentation 13b du bain 13 est au-dessus du pied de la colonne descendante 7.

La présente invention est maintenant décrite, à titre expérimental, par référence au montage expérimental illustré à la f**igure 3**, et commenté comme suit :
51 : pompe à vide
52 : oxygénateur
53 : réservoir équivalent au bain 13 d'aquaculture
1 : colonne à dépression
10 : phase aqueuse injectée
54 : récupérateur ou réservoir tampon

### 1. Le montagne expérimental

### 1.1 La colonne à dépression 1

La colonne à dépression 1 est constituée de deux tubes 2, 3 PVC concentriques de 4,5 m de haut et de 25 cm de diamètre pour l'extérieur 2 et de 4 m de haut et 16 cm de diamètre pour l'intérieur 3 formant un tube en U. Le principe de cette colonne consiste à injecter 10 de l'air dans le tube intérieur de façon à entraîner un courant d'eau 6 par air-lift, puis à créer une dépression par aspiration de cet air en haut 20 de la colonne grâce à une pompe à vide 12. Tandis que de l'air 19 est aspiré en sommet de colonne, l'eau entraînée par l'air-lift va redescendre 7 dans le tube extérieur 3. Afin d'obtenir un système entretenu en dynamique stable, on a créé une aspiration légèrement supérieure à l'injection. L'eau excédentaire aspirée est piégée dans un réservoir tampon 34 avant la pompe 12 afin de la protéger. Cette eau est chargée en fines particules qui ont été entraînées en sommet de colonne par gazo-siphon. Le système permet donc d'observer la qualité de l'eau récupérée. La surface développée par les microbulles de l'air injecté est d'environ 9 m².L⁻¹. La colonne fonctionne avec une pompe 12 de 175 W pour l'aspiration. Pour l'injection, la consommation énergétique varie selon le volume d'air que l'on souhaite injecter. Celle-ci n'a pas dépassé 35 W.

### 1.2 Le reste de l'installation

Le réservoir 53 a une capacité volumique de 1,5 m³. Le CO₂ et l'O₂ sont fournis par des bouteilles sous pression. Le réservoir tampon 54 a une capacité volumique d'environ 100 L. Une vanne située en bas permet de le vider en fin d'expérimentation. Ceci pourrait se faire aisément de façon automatique si l'on souhaiter fonctionner en continu. Pour réoxygéner l'eau, on fait circuler une partie du débit de sortie de la colonne dans l'oxygénateur 52 dans lequel on injecte de l'O₂ pur.

### 2. Expérimentation

### 2.1 Expérimentation de dégazage du CO₂

### 2.1.1 Gazage en CO₂

Pour mesurer l'efficacité de la colonne à dépression à dégazer le CO₂, une quantité de 25 mg.L⁻¹ (+/- 2 mg.L⁻¹) de CO₂ à l'instant initial (Tₒmin) a été fixée. Pour gazer en CO₂, on a utilisé une bouteille de CO₂ comprimé, diffusant le gaz carbonique à travers un microbulleur permettant de faciliter la dissolution du gaz dans l'eau du réservoir 53. En fin d'expérimentation (T₆₀min) on a mesuré la quantité de CO₂ restante.

### 2.1.2 Expérimentations sur la colonne à dépression à profondeur d'injection d'air variable

Des microbulleurs céramiques ont été placés dans le tube central 3 de la colonne à dépression 1 à différentes profondeurs (1, 2, 3 et 4 m), de façon à mesurer l'influence de la profondeur d'injection d'air sur l'efficacité de l'air-lift et du dégazage en CO₂.

### 2.1.3 Expérimentations sur la colonne à dépression à débit d'eau et débit d'air variables

Pour un débit d'air fixe (0,5 L.s⁻¹), on a fait varier le débit d'eau de 0,3 à 3 L.s⁻¹ à l'aide d'une vanne pour mesurer son influence sur l'efficacité de dégazage. De même, pour un débit d'eau fixe (2 L.s⁻¹), on a fait varier le débit d'air injecté de 0,03 à 0,55 L.s⁻¹ en utilisant une vanne.

### 2.2 Dimensionnement de la fonction pompe de la colonne à dépression

Pour évaluer l'efficacité de la fonction pompe, on a mesuré le débit d'eau en fonction de la hauteur manométrique totale (hmt), et ceci pour différents débits d'air injecté (0,15, 0,3, 0,45 et 0;6 L.s⁻¹). La hmt correspond à la pression que doit fournir la pompe 112 pour véhiculer un liquide d'un endroit à un autre. Pour la faire varier, on a augmenté la perte de charge en modifiant le niveau de hauteur de sortie de l'eau dans le réservoir 53 (0 à 40 cm).

### 2.3 Expérimentations sur les pertes thermiques de la colonne à dépression

Dans le but d'estimer la perte thermique pour la colonne à dépression, on a utilisé une résistance chauffante qui a permis d'élever la température de l'eau d'au moins 5°C au-dessus de celle de l'air. La température ambiante de l'air n'étant pas contrôlée, celle-ci a varié durant l'expérience. La différence de température indiquée correspond donc à celle de début de l'expérience. Le calcul de la perte thermique en W a été effectué en considérant le nombre de calories perdues par rapport au volume d'eau du réservoir. Il a été validé par le calcul de la puissance consommée par la résistance pour chauffer le même volume d'eau en un temps donné. Cependant, il n'a pas été tenu compte de l'hygrométrie.

### 2.4 Expérimentations sur l'efficacité d'extraction des microparticules

Pour estimer la capacité d'extraction des microparticules par la colonne 1 à dépression, on a disposé d'un "bloom" algal provenant d'un bassin de lagunage, pour remplir 2/3 du volume du réservoir 53 avec l'eau du bassin. On a ensuite fait fonctionner la colonne à) dépression en faisant des prélèvements de l'eau dans le réservoir à T₀, T₃₀ et T₆₀min, et dans le réservoir tampon 54 à T₆₀min, de façon à quantifier l'extraction des microalgues.

### 3. Mesure des paramètres mécaniques

### 3.1 Débit d'eau

Les débits d'eau ont été mesurés par un débitmètre électronique Endress Hauser Promag W, dont la mesure est donnée en L.min⁻¹ ± 10³ L.min⁻¹.

### 3.2 Débit d'air

Les débits d'air ont été mesurés par un débitmètre à bille Brook Tube Size R16-15-B. La mesure est donnée en mm ± 1 mm. Celle-ci a été convertie en L.s⁻¹ avec une courbe étalon.

### 4. Mesure des paramètres chimiques

### 4.1 Le dioxyde de carbone

Il existe une sonde à CO₂ (Carbon dioxide analyser Oxyguard) donnant directement la valeur en mg.L⁻¹ de CO₂ (au mg.L⁻¹ près), en mesurant la perméabilité lumineuse des gaz dans l'eau par rayonnement infrarouge. Cependant, l'appareil étant relativement long d'utilisation, une courbe étalon de la concentration en CO₂ en fonction du pH dans l'eau de mer a donc été réalisée. Celle-ci a été utilisée pour connaître les valeurs de CO₂ en suivant le pH dans le réservoir avec un pH-mètre à 10⁻² près (Eutech instruments Ecospan pH 5). Les valeurs obtenues avec le pH-mètre en début et en fin d'expérimentation ont toutes été validées avec la sonde CO₂.

### 4.2 L'oxygène

L'oxygène a été mesuré à l'aide d'un oxymètre (Disoolved oxygen meter YSI 52) qui donne directement la valeur en mg.L⁻¹ d'O₂, et en pourcentage de saturation en O₂ dans l'eau. Sa précision est de ± 0,1 mg.L⁻¹ ou ± 0,1 %.

### 4.3 Autres paramètres

Le suivi de la température de l'eau a été effectué avec le thermomètre immergé du pH-mètre à 0,1°C près. Le contrôle de la salinité a été réalisé avec un réfractomètre ATAGO à ± 1 ‰. Pour la mesure de la pression totale de l'ensemble des gaz dissous dans l'eau (azote, oxygène, CO₂...), un saturomètre (Tensionometer 300E ALPHA DESIGN) a donné la valeur au mmHg près.

### 5. Mesure de la quantité de microalgues extraites

La concentration en microalgues n'a pas été déterminée, cependant, une mesure de la densité optique (DO) au spectromètre à ± 10⁻⁴ (Beckman DU 640 Spectrophometer) a permis de donner un ordre de grandeur de la capacité d'extraction des microalgues.

### 6. Résultats

### 6.1 Caractérisation de fonctionnement de la colonne 1 à dépression

### 6.1.1 Fonction pompe

Les expérimentations ont permis de caractériser la capacité de l'air-lift à entraîner l'eau dans le système. Les débits d'eau ont varié en fonction de la quantité d'air injectée, de la profondeur d'injection et de la hmt. En effet, plus on va injecter d'air, plus le débit d'eau résultant va augmenter, plus on va injecter cet air profondément, plus le débit d'eau sera important, et enfin plus on va augmenter la hmt, plus le débit sera faible. Nous avons obtenu durant cette phase d'expérimentation des débits d'eau maximum de l'ordre de 12 m³.h⁻¹, par le simple entraînement de l'air-lift à 0,6 L.s⁻¹ d'air injecté.

### 6.1.2 Fonction de dégazage de la colonne à dépression

L'ensemble des données concernant les expérimentations a permis de réaliser les graphiques. Les imprécisions et les différences entre les méthodes de mesure du CO₂ sont à l'origine des écarts types observés sur les graphiques concernant le dégazage en CO₂.

### 6.1.2.1 Effet de la profondeur d'injection sur l'extraction du CO₂

Le dégazage est plus efficace lorsque l'injection se fait en profondeur, à partir de 2 mètres. Cependant, il n'y a pas de différence entre une injection à 2, 3 ou 4 m.

### 6.1.2.2 Effet du débit d'eau sur l'extraction du CO₂

Le débit d'eau a un effet sur l'efficacité du dégazage. En effet, plus le débit d'eau va être important, plus le dégazage sera efficace jusqu'à atteindre un plateau vers 2 L.s⁻¹. L'efficacité du dégazage maximale semble se situer lorsque le débit d'eau est d'environ 2,5 L.s⁻¹ pour 0,55 L.s⁻¹ d'air injecté, ce qui correspond à un rapport eau/air d'environ 5.

### 6.1.2.3 Effet du débit d'air sur l'extraction du CO₂

La quantité d'air injectée a un bien un effet sur l'effet du dégazage. Comme pour le débit d'eau, l'extraction du CO₂ va augmenter avec le débit d'air, mais son efficacité de dégazage va diminuer puisqu'on atteint un plateau. Le plateau atteint vers 0,4 L.s⁻¹ d'air injecté pour 2 L.s⁻¹ d'eau circulante correspond donc à un rapport eau/air de 5.

### 6.1.3 Fonction écumeur de la colonne à dépression

L'expérimentation a démontré que sur une heure de fonctionnement la densité optique de l'eau du réservoir rempli au 2/3 avec de l'eau très concentrée en microalgues a diminué de moitié..Le concentrat extrait par l'aspiration de la mousse est 120 fois plus turbide que l'eau du réservoir 53 en fin d'expérimentation.

### 7. Discussion

### 7.1 Fonction pompe de la colonne à dépression

De nombreuses études ont développé des descriptions empiriques et théoriques de l'entraînement de l'eau pour différents air-lifts. Cependant, les caractéristiques des gazo-siphons dépendent des configurations spécifiques à chaque système comme les conditions d'entrée de l'air et le type d'injecteur utilisé. Pour l'air-lift testé ici, la quantité d'eau entraînée a logiquement augmenté avec l'injection d'air et la profondeur, et diminué avec la hauteur manométrique totale.

Cependant, il est important de noter qu'on a obtenu des débits d'eau tout à fait étonnants puisqu'ils étaient jusqu'à six fois supérieurs au débit d'air injecté. Ces résultats sont intéressants et peuvent être expliqués par la dépression dans la colonne testée.

### 7.2 Optimisation de la colonne à dépression

### 7.2.1 Choix de la profondeur d'injection de l'air

Les résultats de l'expérimentation montrent que la profondeur optimale d'injection de l'air pour un dégazage efficace se situe à partir de 2 m. Cependant, si l'on souhaite par la même occasion obtenir un débit d'eau conséquent sans utiliser davantage d'énergie, il faut travailler dans des profondeurs d'injections plus importantes pour avoir un débit d'eau plus élevé. On propose donc d'injecter l'air dans la colonne à 3 ou 4 m de profondeur. Ceci permettrait d'obtenir un débit d'eau pouvant atteindre plus de 10 m³.h⁻¹, qui pourrait être utilisé pour d'autres fonctions sans avoir à pomper l'eau.

### 7.2.2 Choix du débit d'eau

Lorsque l'on travaille avec de faibles débits d'eau, le temps de résidence dans la colonne est long, et le dégazage en CO₂ plus important, car on réduit le volume d'eau circulant par rapport au volume d'air passé et inversement. Cependant, si l'on s'intéresse, non pas au dégazage instantané, mais au dégazage d'un volume en un temps donné, on a montré que le meilleur dégazage se situait pour un débit d'environ 2,5 L.s⁻¹, lorsque l'injection d'air fixe est de 0,55 L.s⁻¹. Au-delà, l'efficacité de dégazage n'augmente plus et semble même diminuer. En effet, à 2,5 L.s⁻¹, on obtient le meilleur compromis entre le temps de résidence de l'eau dans la colonne et le temps de renouvellement de l'eau du réservoir, par un ratio eau/air d'environ 5.

### 7.2.3 Choix du débit d'air

On a montré que plus on injecte de l'air, plus le dégazage augmente, jusqu'à atteindre un plateau quand le débit d'air est de 0,4 L.s⁻¹, pour un débit d'eau fixe de 2 L.s⁻¹. L'efficacité de dégazage diminue avec l'augmentation de l'injection d'air. Le débit d'air de 0,4 L.s⁻¹ pour un débit d'eau fixe est de 2 L.s⁻¹, puisque nous avons montré précédemment qu'il s'agissait du meilleur compromis entre le temps de résidence de l'eau dans la colonne et le temps de renouvellement de l'eau du réservoir pour un ratio semblable, c'est-à-dire avec un débit d'air de 0,5 L.s⁻¹.

Cependant, en faisant varier le débit d'air, on fait aussi varier la consommation énergétique. Or, fonctionner avec des débits d'air plus faibles permet d'augmenter considérablement le rendement énergétique de dégazage. Le rendement d'extraction du CO₂ par kW.h⁻¹ est plus efficace aux très faibles injections d'air. Ceci signifie, qu'en théorie, si l'on souhaite réduire largement les coûts énergétiques, il vaut mieux fonctionner avec un faible débit d'air, même si le dégazage en CO₂ est moins efficace, mais suffisant pour la sécurité de l'organisme vivant. Cependant, fonctionner avec un faible débit d'air ne permet pas à l'air-lift de fournir des débits d'eau de 2,5 L.s⁻¹.

Plusieurs possibilités s'offrent donc quant au choix de la quantité d'air à injecter, tout en ayant un débit d'eau suffisamment important :
- soit on utilise une colonne à dépression en la faisant fonctionner avec un ratio eau/air de 5. L'efficacité de dégazage sera optimale, mais coûteuse en énergie ;
- soit dans un souci d'économie d'énergie, on utilise deux colonnes à dépression fonctionnant avec une injection d'air très faible (0,03 L.s⁻¹), mais permettant d'obtenir un débit d'eau de 2 L.s⁻¹, en additionnant leurs débits d'eau (0,96 L.s⁻¹). Le coût énergétique sera environ 30 % plus faible qu'avec une seule colonne à dépression délivrant un débit d'eau de 2 L.s⁻¹, malgré ses contraintes d'espace et d'entretien supplémentaires.

Enfin, une dernière possibilité, probablement plus économique, consisterait à modifier la géométrie de la colonne. En effet, en augmentant la section du tube interne 3 de la colonne, le débit d'eau sera supérieur à celui pour la même injection d'air et donc pour le même coût énergétique.

### 7.2.4 La fonction écumeur

En même temps qu'elle retire le CO₂ de l'eau, la colonne à dépression est capable de fonctionner très efficacement comme écumeur pour les microparticules et notamment pour les microalgues. Au bout d'une heure, la colonne a été capable de retirer environ la moitié des algues présentes dans le réservoir. Ces résultats obtenus sont inattendus.

En effet, à l'heure actuelle, on estime que 80 % de la consommation en O₂ des filtres biologiques est utilisée pour la dégradation de la matière carbonée particulaire, et seulement 20 % sert à traiter les matières azotées. En retirant cette matière particulaire, les filtres biologiques serviraient donc principalement à traiter la matière azotée, on pourrait ainsi non seulement réduire leur taille de 80 %, mais aussi faire des économies au niveau de l'ajout d'O₂ dans le circuit recyclé.

De plus, étant donné la taille des oeufs de parasites (50 µm) est supérieure à celle des microalgues (2 µm), si la colonne peut retirer les microalgues, elle peut aussi retirer les oeufs de parasites. Ceci est très intéressant en termes de biosécurité notamment pour éliminer toute forme de parasitisme dans les élevages.

## Revendications

1. Procédé de traitement d'un effluent aqueux (16) comprenant au moins un composé gazeux dissous, par exemple du gaz carbonique, consistant à séparer au moins partiellement ledit composé dudit effluent, en vue d'obtenir une phase aqueuse traitée, appauvrie en ledit composé, procédé selon lequel :
(a) on établit une colonne liquide montante (6) de l'effluent aqueux, en injectant et distribuant (10) dans ladite colonne, du côté bas, une phase gazeuse moins riche en ledit composé que l'effluent aqueux, par exemple de l'air ou de l'oxygène, ladite phase gazeuse se répartissant dans ladite colonne sous forme de bulles dont le volume augmente vers le haut, moyennant quoi on obtient du côté haut un courant mixte (18) liquide/gaz
(b) on sépare le courant mixte liquide/gaz en un courant liquide (17) constituant la phase aqueuse traitée et un courant gazeux (19) effluent enrichi en ledit composé gazeux le courant liquide (17) séparé du courant gazeux effluent (19) constituant une colonne liquide descendante (7), obtenue par déverse du courant mixte (18) liquide/gaz au-dessus d'un point haut (3a),
**caractérisé en ce qu'**on sépare sous dépression le courant mixte (18) liquide/gaz, en établissant un ciel gazeux (20) entre le courant liquide et le courant gazeux et en aspirant (12) ce dernier au moyen d'une pompe à vide (12).

2. Procédé selon la revendication 1, **caractérisé en ce que** la colonne liquide descendante (7) et la colonne liquide montante (6) sont concentriques l'une par rapport à l'autre.

3. Procédé selon la revendication 1, **caractérisé en ce que** la colonne liquide montante (6) est intérieure et la colonne liquide descendante (7) extérieure, ou inversement.

4. Procédé selon la revendication 1, **caractérisé en ce que** l'effluent aqueux (16) est introduit au pied de la colonne montante (6), et la phase aqueuse soutirée au pied de la colonne descendante (7), sensiblement au même niveau.

5. Procédé selon la revendication 1, **caractérisé en ce que** de l'oxygène est injecté et distribué dans la colonne montante (6), à un niveau supérieur au niveau d'introduction de la phase gazeuse.

6. Procédé selon la revendication 1, **caractérisé en ce que** la section de la colonne descendante (7) croît vers le bas.

7. Procédé selon la revendication 1, **caractérisé en ce que** de l'ozone est injecté (22) et distribué dans la colonne descendante (7), à un niveau inférieur au niveau d'introduction (10) de la phase gazeuse.

8. Procédé selon la revendication 1, **caractérisé en ce que** le courant gazeux (19) effluent, sous forme de mousse est séparé (23) en un exsudat liquide (24), comprenant une fraction particulaire, évacué (25), et un effluent gazeux (26), aspiré (12).

9. Procédé de culture d'un organisme vivant en milieu aqueux recirculé, selon lequel :
- on dispose d'un bain (13) du milieu aqueux, dans lequel l'organisme vivant est cultivé,
- on soutire du bain un courant effluent (15), à partir duquel on obtient l'effluent aqueux (16),
- et on alimente le bain avec un courant d'alimentation, obtenu à partir de la phase aqueuse traitée, la phase aqueuse traitée étant obtenue en dehors du bain à partir de l'effluent aqueux, conformément au procédé selon l'une quelconque des revendications 1 à 8.

10. Procédé selon la revendication 9, **caractérisé en ce que** le niveau de soutirage (1 3a) du bain (13) est sensiblement le même que celui du pied de la colonne montante (6).

11. Procédé selon la revendication 10, **caractérisé en ce que** le niveau d'alimentation (13b) du bain (13) est au-dessus du pied de la colonne descendante (7).

12. Procédé d'aquaculture selon l'une quelconque des revendications 9 à 11.

13. Installation (1) pour la mise en oeuvre du procédé selon la revendication 1, **caractérisé en ce qu'**elle comprend :
- deux tubes concentriques, l'un extérieur (2) et l'autre intérieur (3), disposés verticalement, ménageant une enceinte tubulaire interne (4) pour la colonne montante (6) ou la colonne descendante (7), et une enceinte tubulaire externe (5) pour la colonne descendante (7) ou la colonne montante (6) ; le tube extérieur (2) étant fermé (2a) dans sa partie supérieure, au-dessus de l'extrémité supérieure (3a) du tube intérieur (3),
- un moyen d'introduction (8) de l'effluent aqueux (16) au pied de l'enceinte interne (4) ou de l'enceinte externe (5) ; un moyen d'évacuation (9) de la phase aqueuse traitée au pied de l'enceinte externe (5) ou de l'enceinte interne (4),
- un moyen d'injection (10) situé du côté bas de l'enceinte tubulaire interne (4) ou de l'enceinte externe (5) et distribution de la phase gazeuse
dans la colonne montante (6), relié à une source de ladite phase gazeuse sous pression,
- un moyen d'évacuation (11) du courant gazeux effluent, relié à un moyen d'aspiration (12) de ce dernier sous la forme d'une pompe à vide.

## Claims

1. A method for treating an aqueous effluent (16) comprising at least one dissolved gaseous compound, for example carbon dioxide, consisting in at least partially separating said compound from said effluent, in order to obtain a treated aqueous phase, depleted of said compound, a method according to which:
(a) an upflow liquid column (6) of the aqueous effluent is established, by injecting and distributing (10) into said column, at the bottom, a gas phase less rich in said compound than the aqueous effluent, for example air or oxygen, said gas phase being distributed in said column in the form of bubbles whereof the volume increases upward, whereby a mixed liquid/gas stream (18) is obtained at the top,
(b) the mixed liquid/gas stream is separated into a liquid stream (17) constituting the treated aqueous phase, and an offgas stream (19) enriched with said gaseous compound, the liquid stream (17) separated from the offgas stream (19) constituting a downflow liquid column (7), obtained by overflow of the mixed liquid/gas stream (18) above a high point (3a),
**characterized in that** the mixed liquid/gas stream (18) is separated under vacuum by establishing a gas headspace (20) between the liquid stream and the gas stream, and by aspirating the latter with vacuum pump (12).

2. The method as claimed in claim 1, **characterized in that** the downflow liquid column (7) and the upflow liquid column (6) are concentric to one another.

3. The method as claimed in claim 1, **characterized in that** the upflow liquid column (6) is internal and the downflow liquid column (7) is external, or vice versa.

4. The method as claimed in claim 1, **characterized in that** the aqueous effluent (16) is introduced at the bottom of the upflow column (6), and the aqueous phase is tapped off at the bottom of the downflow column (7) substantially at the same level.

5. The method as claimed in claim 1, **characterized in that** oxygen is injected and distributed in the upflow column (6) at a higher level than the gas phase introduction level.

6. The method as claimed in claim 1, **characterized in that** the cross section of the downflow column (7) increases downward.

7. The method as claimed in claim 1, **characterized in that** ozone is injected (22) and distributed in the downflow column (7), at a lower level than the gas phase introduction level (10).

8. The method as claimed in claim 1, **characterized in that** the offgas stream (19) in the form of foam is separated (23) into a removed (25) liquid exudates (24), comprising a particulate fraction, and an aspirated (12) offgas (26).

9. A method for culturing a living organism in recirculated aqueous medium, whereby:
- a bath (13) of the aqueous medium is provided, in which the living organism is cultivated,
- an effluent stream (15), from which the aqueous effluent (16) is obtained, is tapped off from the bath,
- and the bath is supplied with a feed stream, obtained from the treated aqueous phase, the treated aqueous phase being obtained outside the bath from the aqueous effluent, according to the method as claimed in any one of claims 1 to 8.

10. The method as claimed in claim 9, **characterized in that** the level of withdrawal (13a) from the bath (13) is substantially the same as that of the bottom of the upflow column (6).

11. The method as claimed in claim 10, **characterized in that** the feed level (13b) of the bath (13) is above the bottom of the downflow column (7).

12. The aquaculture method as claimed in any one of claims 9 to 11.

13. An installation (1) for implementing the method as claimed in any one of claims 9 to 11, **characterized in that** it comprises:
- two concentric tubes, one external (2) and the other internal (3), positioned vertically, arranging an internal tubular chamber (4) for the upflow column (6) or the downflow column (7), and an external tubular chamber (5) for the downflow column (7) or the upflow column (6); the external tube (2) being closed (2a) in its upper part, above the upper end (3a) of the internal tube (3),
- means (8) for introducing the aqueous effluent (16) at the bottom of the internal chamber (4) or the external chamber (5); means (9) for removing the treated aqueous phase at the bottom of the external chamber (5) or the internal chamber (4),
- means (10) for injecting at the bottom of the external chamber (5) or the internal chamber (4), and distributing the gas phase in the upflow column (6), connected to a source of said pressurized gas phase,
- means (11) for removing the offgas stream, connected to means (12) for aspirating same in the form of a vacuum pump.

## Patentansprüche

1. Verfahren zur Behandlung eines wässrigen Abflusses (16), der mindestens eine gelöste Gasverbindung umfasst, zum Beispiel Kohlendioxid, das darin besteht, die Verbindung zumindest teilweise aus dem Abfluss zu trennen, um eine behandelte Wasserphase zu erhalten, die von der Verbindung abgereichert ist, wobei das Verfahren darin besteht:
(a) Errichten einer aufsteigenden Flüssigkeitssäule (6) des wässrigen Abflusses durch Einblasen und Verteilen (10) in die Säule von unten einer Gasphase, die weniger von der Verbindung enthält als der wässrige Abflusses, zum Beispiel Luft oder Sauerstoff, wobei sich die Gasphase in der Säule in Form von Blasen verteilt, deren Volumen nach oben steigt, wodurch man oben einen Flüssigkeits-/Gas-Mischstrom (18) erhält,
(b) Trennen des Flüssigkeits-/Gas-Mischstroms in einen Flüssigkeitsstrom (17), der die behandelte wässrige Phase darstellt, und einen abfließenden Gasstrom (19), der mit der Gasverbindung angereichert ist, wobei der vom abfließenden Gasstrom (19) getrennte Flüssigkeitsstrom (17) eine absteigende Flüssigkeitssäule (7) darstellt, die durch Überlauf des Flüssigkeits-/Gas-Mischstroms (18) über einen hohen Punkt (3a) hergestellt wird,
**dadurch gekennzeichnet, dass** der Flüssigkeits-/Gas-Mischstrom (18) durch Ausbildung eines Gashimmels (20) zwischen dem Flüssigkeitsstrom und dem Gasstrom und Ansaugen (12) des Letzteren mit einer Vakuumpumpe (12) unter Unterdruck getrennt wird.

2. Verfahren nach Anspruch 1, **dadurch gekennzeichnet, dass** die absteigende Flüssigkeitssäule (7) und die aufsteigende Flüssigkeitssäule (6) zueinander konzentrisch sind.

3. Verfahren nach Anspruch 1, **dadurch gekennzeichnet, dass** die aufsteigende Flüssigkeitssäule (6) innen ist und die absteigende Flüssigkeitssäule (7) außen oder umgekehrt.

4. Verfahren nach Anspruch 1, **dadurch gekennzeichnet, dass** der wässrige Abfluss (16) am Fuß der aufsteigenden Säule (6) eingeführt wird und die wässrige Phase am Fuß der absteigenden Säule (7) etwa auf derselben Ebene abgezogen wird.

5. Verfahren nach Anspruch 1, **dadurch gekennzeichnet, dass** Sauerstoff in die aufsteigende Säule (6) auf einer Ebene über der Ebene der Einleitung der Gasphase eingeblasen und verteilt wird.

6. Verfahren nach Anspruch 1, **dadurch gekennzeichnet, dass** der Querschnitt der absteigenden Säule (7) nach unten zunimmt.

7. Verfahren nach Anspruch 1, **dadurch gekennzeichnet, dass** Ozon in die absteigende Säule (7) auf einer Ebene unter der Ebene der Einleitung (10) der Gasphase eingeblasen (22) und verteilt wird.

8. Verfahren nach Anspruch 1, **dadurch gekennzeichnet, dass** der abfließende Gasstrom (19) in Form von Schaum in ein flüssiges Exsudat (24) getrennt wird, das eine abgeleitete Partikelfraktion (25) und einen angesaugten (12) Gasabfluss (26) umfasst.

9. Kulturverfahren für einen lebenden Organismus in einem umgewälzten wässrigen Milieu, wobei:
- man über ein Bad (13) des wässrigen Milieus verfügt, in dem der lebende Organismus kultiviert wird,
- von dem Bad ein abfließender Strom (15) abgezogen wird, von dem man den wässrigen Abfluss (16) erhält,
- und das Bad mit einem Versorgungsstrom versorgt wird, der aus der behandelten Gasphase gewonnen wird, wobei die behandelte Gasphase außerhalb des Bads aus dem wässrigen Abfluss gemäß dem Verfahren nach einem der Ansprüche 1 bis 8 gewonnen wurde.

10. Verfahren nach Anspruch 9, **dadurch gekennzeichnet, dass** die Abzugsebene (13a) des Bads (13) etwa dieselbe ist wie die des Fußes der aufsteigenden Säule (6).

11. Verfahren nach Anspruch 10, **dadurch gekennzeichnet, dass** die Versorgungsebene (13b) des Bads (13) oberhalb des Fußes der absteigenden Säule (7) ist.

12. Aquakulturverfahren nach einem der Ansprüche 9 bis 11.

13. Anlage (1) zur Umsetzung des Verfahrens nach Anspruch 1, **dadurch gekennzeichnet, dass** sie umfasst:
- zwei vertikal angeordnete konzentrische Rohre, eins außen (2) und das andere innen (3), die einen inneren röhrenförmigen Raum (4) für die aufsteigende Säule (6) oder die absteigende Säule (7) ausbilden, und einen äußeren röhrenförmigen Raum (5) für die absteigende Säule (7) oder die aufsteigende Säule (6); wobei das äußere Rohr (2) in seinem oberen Abschnitt über dem oberen Ende (3a) des inneren Rohrs (3) geschlossen ist (2a),
- ein Einleitmittel (8) des wässrigen Abflusses (16) am Fuß des inneren Raums (4) oder des äußeren Raums (5); ein Ableitmittel (9) der behandelten wässrigen Phase am Fuß des äußeren Raums (5) oder des inneren Raums (4),
- ein sich an der unteren Seite des inneren röhrenförmigen Raums (4) oder des äußeren Raums (5) befindendes Einblas- (10) und -verteilungsmittel der Gasphase in die aufsteigende Säule (6), das mit einer Quelle der Gasphase unter Druck verbunden ist,
- ein Ableitmittel (11) des abfließenden Gasstroms, das mit einem Ansaugmittel (12) des Letzteren in Form einer Vakuumpumpe verbunden ist.
